# EUROPEAN PATENT SPECIFICATION

(11) **EP 3 013 742 B1**
(45) Date of publication and mention of the grant of the patent: **30.05.2018**
(21) Application number: 13786539.0
(22) Date of filing: 24.09.2013
(51) Int. Cl.: C01B 25/37, B01J 21/18, B01J 23/50, B01J 35/00, C01B 32/182, B01J 37/34, B01J 27/18, B01J 37/00, B01J 37/02, C02F 1/30, C02F 1/72, C02F 101/30, C02F 103/30

(54) **REDUCED GRAPHENE OXIDE-SILVER PHOSPHATE (RGO-AGP) AND A PROCESS FOR THE PREPARATION THEREOF FOR THE PHOTODEGRADATION OF ORGANIC DYES**
REDUZIERTES GRAPHEN-OXID-SILBERPHOSPHAT (RGO-AGP) UND VERFAHREN ZUR HERSTELLUNG DAVON ZUR PHOTODEGRADATION VON ORGANISCHEN FARBSTOFFEN
OXYDE DE GRAPHÈNE RÉDUIT-PHOSPHATE D'ARGENT (RGO-AGP) ET SON PROCÉDÉ DE PRÉPARATION POUR LA DÉGRADATION PHOTOCHIMIQUE DE COLORANTS ORGANIQUES

(30) Priority: 25.06.2013 IN 1870DE2013
(43) Date of publication of application: 04.05.2016
(73) Proprietor: Council of Scientific & Industrial Research An Indian registered body incorporated under the Registration of Societies Act (Act XXI of 1860), New Delhi 110 001 (IN)
(72) Inventor: DAS, Dipti Prakasini, Bhubaneswar 751013 Orissa (IN); SAMAL, Alaka, Bhubaneswar 751013 Orissa (IN); DAS, Jasobanta, Bhubaneswar 751013 Orissa (IN); DASH, Ajit, Bhubaneswar 751013 Orissa (IN)
(74) Representative: Boult Wade Tennant
(86) International application number: PCT/IN2013/000575
(87) International publication number: WO 2014/207754

(56) References cited:
- YANHUI AO ET AL: "Preparation of graphene oxide-Ag3PO4 composite photocatalyst with high visible light photocatalytic activity", APPLIED SURFACE SCIENCE, vol. 271, 1 February 2013 (2013-02-01), pages 265-270, XP055101522, ISSN: 0169-4332, DOI: 10.1016/j.apsusc.2013.01.173
- HAIYING CUI ET AL: "Facile synthesis of graphene oxide-enwrapped Ag3PO4 composites with highly efficient visible light photocatalytic performance", MATERIALS LETTERS, vol. 93, 6 November 2012 (2012-11-06), pages 28-31, XP055101520, ISSN: 0167-577X, DOI: 10.1016/j.matlet.2012.10.116
- D. P. DAS ET AL: "Visible light induced photo-hydroxylation of phenol to catechol over RGO-Ag3VO4 nanocomposites without the use of H2O2", RSC ADVANCES, vol. 2, no. 19, 21 June 2012 (2012-06-21), pages 7377-7379, XP055101453, ISSN: 2046-2069, DOI: 10.1039/c2ra20703f & D P Das ET AL: "Electronic Supporting Information for Visible light induced photo-hydroxylation of phenol to catechol over RGO-Ag 3 VO 4 nanocomposites without the use of H 2 O 2", Electronic Supplementary Material (ESI) for RSC Advances, 21 June 2012 (2012-06-21), page 6PP, XP055101498, Retrieved from the Internet: URL:http://www.rsc.org/suppdata/ra/c2/c2ra 20703f/c2ra20703f.pdf [retrieved on 2014-02-11]
- DATABASE WPI Week 201378 Thomson Scientific, London, GB; AN 2013-R13887 XP002720198, & CN 103 120 930 A (UNIV JIANGSU) 29 May 2013 (2013-05-29)
- Y. BI; S. OUYANG; N. UMEZAWA; J. CAO; J. YE: "Facet Effect of Single-Crystalline Ag3PO4 Sub-microcrystals on Photocatalytic Properties", J. AM. CHEM. SOC., vol. 133, 12 April 2011 (2011-04-12), pages 6490-6492, XP002720199, cited in the application

## Description

### Field of the invention

This present invention relates to reduced graphene oxide-silver phosphate (RGO-AgP) and a process for the preparation thereof for the photodegradation of organic dyes. Particularly, the present invention provides reduced graphene oxide-silver phosphate (RGO-AgP) and one-pot in-situ photoreduction process for the preparation thereof for the photodegradation of organic textile dyes under visible light illumination. Particularly, the present invention relates to the process for one-pot in-situ synthesis of RGO-AgP, a robust active semiconducting photocatalytic material.

### Background of the invention

Textile industries generally spend two thirds of the 10,000 different types of dyes and pigments produced annually [M. Doble, A. Kumar, Biotreatment of Industrial Effluents, Elsevier Butterworth- Heinemann, Oxford, UK, 2005.]. One of the major bottlenecks in the textile industry is the dye fixation, i.e., spent dye baths, residual dye liquors and water from washing operations contain dye in the hydrolyzed and unfixed form. Although, dye fixation depends on the class of the dye, type of fabric and other dyeing parameters, nearly 10% of the dye used is discharged into the effluent as a result of this process. Conventional treatment of wastewater like neutralization of acidic and alkaline liquors, flocculation and chemical oxidation results in 70-80% of decolorization, while still maintaining the organic carbon load in the effluent. Biodegradation methods are effective in reducing the biological oxygen demand of the effluent, but nearly 53% of the colors are resistant to microbial attack [A. Al-Kdasi, A. Idris, K. Saed, C.T. Guan, Global Nest: Int. J. 6 (2004) 222]. Hence, advanced oxidation processes like ultraviolet (UV), UV/H₂O₂, UV/ozone, UV/Fenton [M. Neamtu, A. Yediler, I. Siminiceanu, M. Macoveanu, A. Kettrup, Dyes Pigments 60 (2004) 61], UV/ultrasound (US) [R. Vinu, G. Madras, Environ. Sci. Technol. 43 (2009) 473], UV/microwave [X. Zhang, G. Li, Y. Wang, Dyes Pigments 74 (2007) 536] and some combinations of the above methods with a photocatalyst have been researched extensively for the complete mineralization of dyestuffs and toxic organic compounds.

As a fascinating two dimensional carbon allotrope, graphene has triggered a "Gold Rush" all over scientific research areas especially after the Nobel Prize for Physics in 2010. Different attempts have been made by different investigators to study the synthetic routes of graphene nanocomposites for various applications; Mendes and Tanaka [M. Mendes, P. Tanaka, WO2011/132036 A1, 2011] studied the photocatalytic activity of graphene-TiO₂ towards organic synthesis, methanol production and H₂ production under visible light illumination; Kinloch et al. [Kinloch et al., US patent, US2012/0301707A1, 2012] investigated on graphene polymer composites, Kim et al. [Kim et al., US Patent, US2012/0104327, 2012] studied the preparation routes of spinel lithium titanium oxide-graphene composites; Liu et al. [Liu et al., US Patent, US 8,257,867 B2, 2012 and ref. there in] explored the nanocomposites of graphene photocatalysts. More recently, Behera et al. [G.C. Behera, K.M. Parida, P.K. Satapathy, RSC Adv. 3 (2013) 4863] reported RGO-VPO composites for direct conversion of cyclohexene to adipic acid; Das et al. [D.P. Das, R.K. Barik, J. Das, P. Mohapatra and K.M. Parida, RSC Adv. 2 (2012) 7377] reported a novel route to synthesis RGO-Ag₃VO₄ in presence of sacrificial agent under visible light illumination and unusual activity of the composite towards photohydroxylation of phenol for forming catechol in absence of H₂O₂. Recently, Ag₃PO₄ has been demonstrated to show excellent photoactivity to oxidise water (O₂ evolution) and for the degradation of organic contaminants under visible light illumination [Z. G. Yi, J. H. Ye, N. Kikugawa, T. Kako, S. X. Ouyang, H. Stuart-Williams, H. Yang, J. Y. Cao, W. J. Luo, Z. S. Li, Y. Liu and R. L. Withers, Nat. Mater. 9 (2010) 559; Y. Bi, S. Ouyang, N. Umezawa, J. Cao and J. Ye, J. Am. Chem. Soc. 133 (2011) 6490]. More specifically, this novel photocatalyst can achieve a quantum efficiency of up to 90% for O₂ evolution at wavelengths longer than 420 nm [Z. G. Yi, J. H. Ye, N. Kikugawa, T. Kako, S. X. Ouyang, H. Stuart-Williams, H. Yang, J. Y. Cao, W. J. Luo, Z. S. Li, Y. Liu and R. L. Withers, Nat. Mater. 9 (2010) 559]. Moreever, Ag₃PO₄ is sparingly soluble in aqueous solution, which greatly reduces its stability. During the photocatalytic process, the transformation of Ag⁺ into Ag usually takes place, which results in the photocorrosion of Ag₃PO₄ in the absence of electron acceptors. Furthermore, along with the photocatalytic reaction, the appearance of by-products, black metallic Ag particles, inevitably prevent visible light absorption of Ag₃PO₄, which decreases the photocatalytic activity [Y. P. Bi, S. X. Ouyang, J. Y. Cao and J. H. Ye, Phys. Chem. Chem. Phys. 13 (2011) 10071]. Weak photon absorption and fast carrier kinetics in graphene restricts its applications in photo-sensitive reactions. Such restrictions or limitations can be overcome by covalent coupling of another photosensitive nanostructure to graphene, forming graphene-semiconductor nanocomposites. In view of these findings, we have attempted to develop a process for synthesis of RGO-AgP composites for degradation of textile dyes; cationic, anionic and mixed. Here we have studied the Rhodamine B (RhB), Rhodhamine 6G (Rh6G), Methylene blue (MB) as cationic dye and Congo red (CR) and Methyl orange (MO) as anionic model dyes which are represented below in the schematic table 1 with their λₘₐₓ.

Yanhui Ao et al "Preparation of graphene oxide-Ag3PO4 composite photocatalyst with high visible light photocatalytic activity" Applied Surface Science, vol. 271, 2913, pages 265-270 describes graphene oxide/Ag₃PO₄ (GO-Ag₃PO₄) composite photocatalysts prepared by a simple precipitant method. The authors describe an increase in photocatalytic activity for GO-Ag3PO4 composite materials compared with pure Ag₃PO₄ under visible light.

The process of preparation of RGO-AgP nanocomposites in one-pot photoreduction is not available in the literature and it has been processed for the first time.

The conditions prescribed in this invention are not specified by any other invention so far.

**Table 1. List of dyes used in the photodegradation process along with their absorption maxima.**

| **Dyes** | **Absorbance** |
|---|---|
| 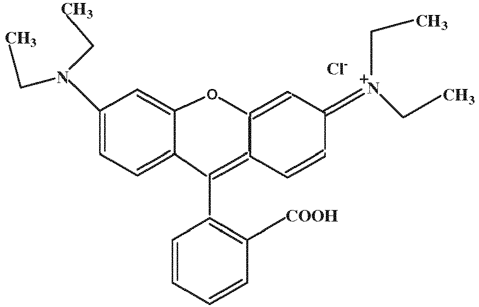 | 553 |
| Rhodamine B (RhB) | |
| 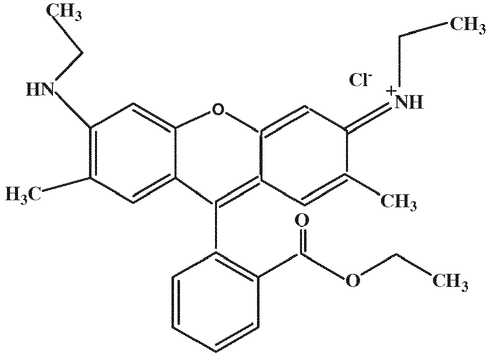 | 526 |
| Rhodamine 6G (Rh6G) | |
| 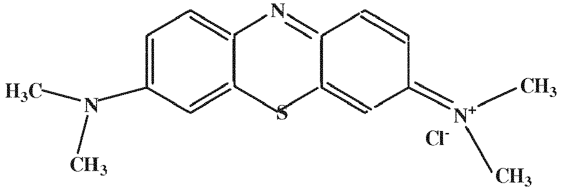 | 664 |
| Methylene Blue (MB) | |
| 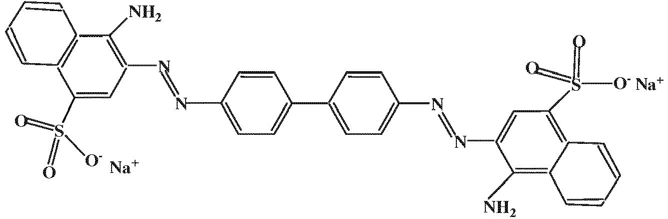 | 500 |
| Congo red (CR) | |
| 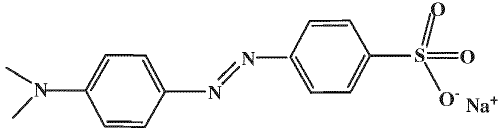 | 464 |
| Methyl orange (MO) | |

### Objective of the invention

The main object of the present invention is to provides reduced graphene oxide-silver phosphate (RGO-AgP) and one-pot in-situ photoreduction process for the preparation thereof for the photodegradation of organic textile dyes under visible light illumination which obviates the drawbacks of the hitherto known prior art as detailed above.

Another object of the present invention is to provide one-pot photo-fabrication of RGO-AgP nanocomposites for fast removal of textile dyes via adsorptive photodegradation.

Another object of the present invention is to provide use of different wt.% of RGO-AgP nanocomposites for fast photodegradation of organic textile dyes.

Still another object of the present invention is to provide easily controllable experimental conditions.

### Summary of the invention

Accordingly, the present invention provides reduced graphene oxide-silver phosphate (RGO-AgP) which comprises Reduced graphene oxide (RGO) in the range of 0.82 - 5.44% and AgP in the range of 94.56 - 99.18%.

In an embodiment of the present invention one-pot in-situ photoreduction process for synthesis of a reduced graphene oxide-silver phosphate (RGO-AgP) as claimed in claim 1, wherein the said process comprising the steps of;
(a) pretreating graphene oxide (GO) at 70-90 °C for 24-30 h;
(b) making a transparent dispersion of graphene oxide as obtained in step (a) by ultrasonication for 30-60 mins;
(c) adding AgNO₃ on to graphene oxide dispersion as obtained in step (b) followed by ultrasonication of the reaction mixture for 15-30 mins;
(d) adding stoichiometric quantity of aqueous solution of di-ammonium hydrogen phosphate in the reaction mixture as obtained in step (c);
(e) aging the reaction mixture as obtained in step (d) for a period ranging between 30-60 mins followed by addition of dry ethanol;
(f) visible light illumination of the reaction mixture as obtained in step (e) for 1-2 h followed by separation of solids via centrifugation and drying at 70°C for a period ranging 24-26 h and grinding to obtain reduced graphene oxide-silver phosphate (RGO-AgP).

In another embodiment of the present invention mole ratio of graphene oxide and AgNO₃ is in the range of 0.035-0.28.

Yet in another embodiment of the present invention the AgP is prepared in-situ.

Yet in another embodiment of the present invention insitu prepared AgP is used as support.

Yet in another embodiment of the present invention graphene oxide is used as dopant.

Still in another embodiment of the present invention di-ammonium hydrogen phosphate used in step (d) is as precursor for phosphate source.

Still in another embodiment of the present invention the support as well as precursor is taken in an aqueous solution in a stoichiometric ratio.

Still in another embodiment of the present invention yield of reduced graphene oxide-silver phosphate (RGO-AgP) is in the range of 97-100%.

Still in another embodiment of the present invention the reduced graphene oxide-silver phosphate (RGO-AgP) obtained from the process is useful for photodegradation of organic textile dyes.

Still in another embodiment of the present invention reduced graphene oxide-silver phosphate (RGO-AgP) is reusable up to no of cycles without disturbing the structural changes in the graphene framework even illumination of visible light.

### Brief description of the drawing

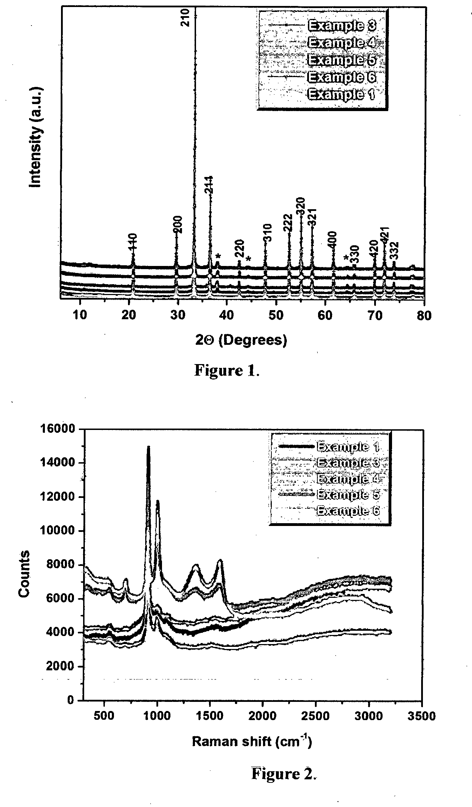

Fig 1: PXRD patterns of Examples 1, 3-6 which gives indication that Cubic silver phosphates were developed onto the RGO sheets (JCPDS no. 06-0505) and metallic silver impurities which is indicated by (*).
Fig 2: Raman shift of examples 1, 3-6 which shows a shift in D- and G- band is predominantly observed in case of Example 5 and 6.

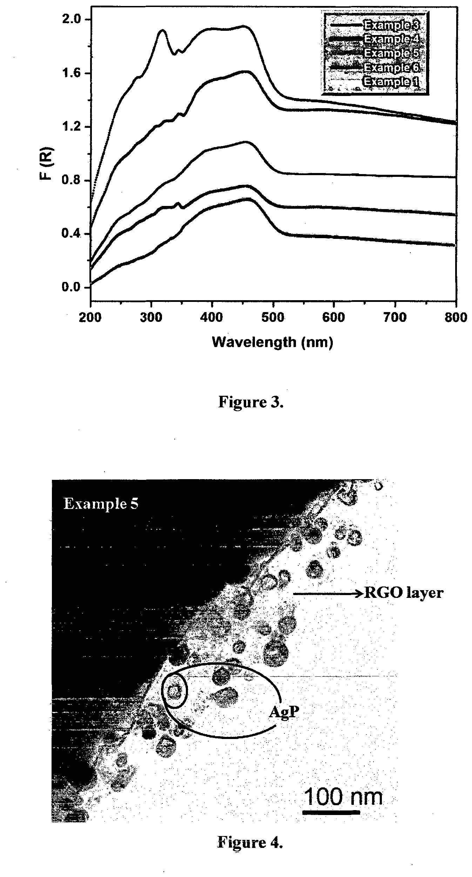

Fig 3: DRUV-Vis spectra of Example 1, 3-6 which gives the evidence of surface plasmonic resonance in the region 400-530 nm. Compared to Example 1, Example 3-6 absorbs strongly in visible region which enable them to be active under visible light. The strong shoulder at 250 in case of Example 3-6 shows π-π transition in RGO.
Fig 4: TEM micrograph of Example 5 which shows 20-25 nm AgP particles were distributed very nicely onto the reduced graphene nanosheets.

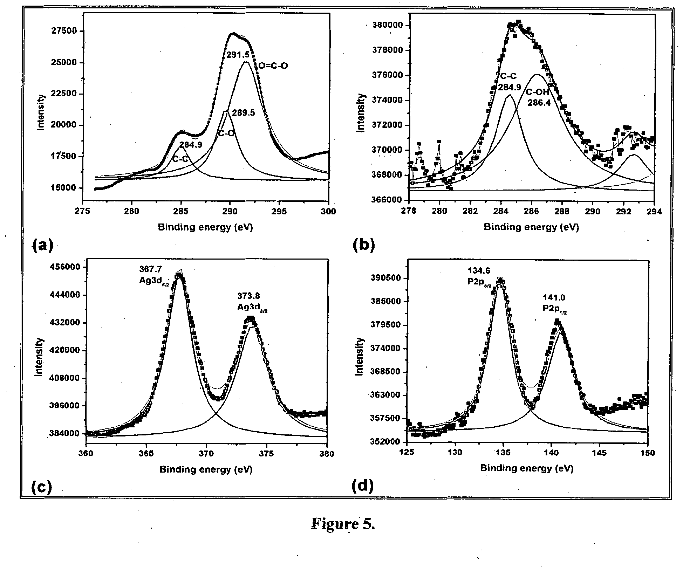

Fig 5: XPS survey of (a) Example 2 (b) C1s (c) Ag3d (d) P2p survey of Example 5. This shows the relative intensity of C-C bond of Example 5 compared to Example 2. This suggests the formation of C-OH (286.4 eV) in case of Example 5 compared to Example 2.

### Detailed description of the invention

The present invention provides a new photocatalytic material preparation of RGO-AgP nanocomposites *which comprises,* (a) pretreatment of 0.017-0.2668 g of pristine graphene oxide (GO), (b) making a transparent dispersion of GO via ultrasonication for 30-60 mins (c) addition of 1-4.08 g of AgNO₃ on to GO dispersion (d) ultrasonication of the mixture for 15-30 mins (e) addition of stoichiometric quantity of di-ammonium hydrogen phosphate in 40-50 ml water, (f) aging the mixture for 30-60 min, (g) addition of 5-10 ml of dry ethanol, (h) visible light illumination of the mixture for 1-2 h, (i) separation of solids via centrifugation (j) drying at 70°C and grinding. *In the present invention* di-ammonium hydrogen phosphate is used as precursor for phosphate source and graphene oxide is used as a dopant. The support as well as precursor is taken in an aqueous solution in a stoichiometric quantity.

Novelty of the present invention lies in unique process for development of RGO-AgP nanocomposites. In the closest prior art, AgP is used for the evolution of O₂ from water, it can't be used for hydrogen evolution without the use of redox mediator and AgP can't degrade organic pollutants easily due to its low adsorptivity. Moreover, it undergoes photo-corrosion under light illumination. But, the material developed in the present investigation can liberate H₂ and degrade the textile dyes within 05 mins which is the real beauty and novelty of the RGO-AgP nanocomposite photocatalysts. The steps involve are as follows:
1) Pretreatment of 0.017-0.2668 g of pristine graphene oxide (GO) and making a transparent dispersion of GO via ultrasonication for 30-60 mins.
2) Addition of 1-4.08 g of AgNO₃ on to GO dispersion followed by ultrasonication of the mixture for 15-30 mins.
3) Addition of stoichiometric quantity of di-ammonium hydrogen phosphate in 40-50 ml water.
4) Aging the mixture for 30-60 min following the addition of 5-10 ml of dry ethanol with visible light illumination of the mixture for 1-2 h which is a non-obvious step for the formation of the matrix.
5) Separation of solids via centrifugation, drying at 70°C and grinding.
6) The formation of product was confirmed by X-ray diffraction, Raman, XPS, ¹³C NMR and TEM studies.
7) The collected nanocomposites were tested for the degradation of textile dyes under visible light illumination.

The RGO-AgP can be used under solar as well as Visible radiation and it can be reused up to no of cycles without disturbing the structural changes in the graphene framework even illumination of visible light.

The following examples are given by way of illustration for the working of the invention in actual practice and therefore, should be construed to limit the scope of the present invention.

### Example 1: Preparation of pristine Ag₃PO₄ (Conditions: Silver nitrate = 2.04 g, (NH₄)₂HPO₄ = 0.54 g)

A beaker is charged with 50 ml of water with 2.04 g silver nitrate. A stoichiometric quantity; 0.54 g of di-ammonium hydrogen phosphate was added to the above solution followed by stirring for 60 mins at 27 °C. The mixture is filtered, washed with double distilled water and ethanol followed by drying at 70 °C for 24 h and grinding.

### Example 2: Pretreatment of graphene oxide (GO) (Conditions: GO = 2 g)

A beaker is charged 2 g of GO prepared by Das et al. (D.P. Das, R.K. Barik, J. Das, P. Mohapatra and K.M. Parida, RSC Adv. 2 (2012) 7377). It is kept in the air oven at 70 °C for 24 h.

### Example 3: Preparation of 1 wt % RGO-Ag₃PO₄ (RGO-AgP) (Conditions: GO=0.0168 g, Silver nitrate = 2.04 g, (NH₄)₂HPO₄ = 0.54 g)

A beaker is charged with 0.0168 g of pretreated GO (graphene oxide) as in example 2 in 100 ml distilled water. The suspension is sonicated for 45 mins to get a homogeneous transparent dispersion. A weighed amount of 2.04 g of silver nitrate is added to the above suspension and sonicated for another 15 mins. A stoichimetric quantity; 0.54 g of di-ammonium hydrogen phosphate in 40 ml water is added to the above suspension followed by stirring for 1 h. The mixture is kept under Visible light (VISL) illumination for 2 h after addition of 10 ml of dry ethanol. The mixture is filtered, washed with double distilled water and ethanol followed by drying at 70 °C for 24 h and grinding. The yield is 1.95 g.
Composition: RGO = 0.82% and AgP = 99.18%.

### Example 4: Preparation of 2 wt.% RGO-AgP (Conditions: GO=0.0168 g, Silver nitrate = 1.02 g, (NH₄)₂HPO₄ = 0.27 g)

A beaker is charged with 0.0168 g of pretreated GO (graphene oxide) as in example 2 in 100 ml distilled water. The suspension is sonicated for 60 mins to get a homogeneous transparent dispersion. A weighed amount of 1.02 g of silver nitrate is added to the above suspension and sonicated for another 30 mins. A stoichimetric quantity; 0.27 g of di-ammonium hydrogen phosphate in 50 ml water is added to the above suspension followed by stirring for 30 min. The mixture is kept under VISL illumination for 1 h after addition of 5 ml of dry ethanol. The mixture is filtered, washed with double distilled water and ethanol followed by drying at 70 °C for 24 h and grinding. The yield is 1.02 g. Composition: RGO = 1.65% and AgP = 98.35%.

### Example 5: Preparation of 4 wt % RGO-AgP (Conditions: GO=0.1008 g, Silver nitrate = 3.06 g, (NH₄)₂HPO₄ = 0.81 g)

A beaker is charged with 0.1008 g of pretreated GO (graphene oxide) as in example 2 in 100 ml distilled water. The suspension is sonicated for 45 mins to get a homogeneous transparent dispersion. A weighed amount of 3.06 g of silver nitrate is added to the above suspension and sonicated for another 15 mins. A stoichimetric quantity; 0.81 g of di-ammonium hydrogen phosphate in 40 ml water is added to the above suspension followed by stirring for 1 h. The mixture is kept under VISL illumination for 1.5 h after addition of 10 ml of dry ethanol. The mixture is filtered, washed with double distilled water and ethanol followed by drying at 70 °C for 24 h and grinding. The yield is 3.62 g. 13C NMR datas: δ = 60 and 70 for epoxidation and hydroxylated carbon left out after photo-reduction process. There is a peak shift 128 ppm to 126 ppm due to change in the environment of sp2 carbon due to formation of RGO-AgP composite in Example 5.
Composition: RGO =2.78% and AgP = 97.22%.

### Example 6: Preparation of 8 wt% RGO-AgP (Conditions: GO=0.2668 g, Silver nitrate = 4.08 g, (NH₄)₂HPO₄ = 1.08 g)

A beaker is charged with 0.2668 g of pretreated GO (graphene oxide) as in example 2 in 100 ml distilled water. The suspension is sonicated for 30 mins to get a homogeneous transparent dispersion. A weighed amount of 4.08 g of silver nitrate is added to the above suspension and sonicated for another 30 mins. A stoichimetric quantity; 1.08 g of di-ammonium hydrogen phosphate in 50 ml water is added to the above suspension followed by stirring for 1 h. The mixture is kept under VISL illumination for 2 h after addition of 10 ml of dry ethanol. The mixture is filtered, washed with double distilled water and ethanol followed by drying at 70 °C for 24 h and grinding. The yield is 4.9 g. Composition: RGO= 5.44% and AgP = 94.56%.

### Example 7: Comparative example: Adsorptive photodegradation of RhB over AgP (Conditions: AgP = 1.5 g/L, [RhB] = 20 mg/L, Exposer time = 05 min)

The adsorptive photo-degradation of RhB was performed in batch reactors by taking 20 mg/L of the substrate (RhB in water) and 1.5 g/L of the catalyst (**AgP as prepared in example 1**). The solution was exposed to visible light (Irradiation chamber, BS 02, Germany) in closed pyrex flasks at 30 °C with constant stirring. The experiments were compared with the dark controls. The RhB analysis was done by the Spectrophotometric method at 553 nm. After 05 mins of irradiation, the degradation was observed to be 30% out of which 10.25% accounts for adsorption.

### Example 8: Comparative example : Adsorptive photodegradation of RhB over reduced graphene oxide (Conditions: RGO = 1.5 g/L, [RhB] = 20 mg/L, Exposer time = 05 min)

The adsorptive photo-degradation of RhB was performed in batch reactors by taking 20 mg/L of the substrate (RhB in water) and 1.5 g/L of RGO (reduced graphen oxide) as prepared in example 2. The solution was exposed to visible light (Irradiation chamber, BS 02, Germany) in closed pyrex flasks at 30 °C with constant stirring. The experiments were compared with the dark controls. The RhB analysis was done by the Spectrophotometric method at 553 nm. After 05 mins of irradiation, no degradation was observed.

### Example 9: Adsorptive photodegradation of RhB over 4 wt.% RGO-AgP (Conditions: 4RGO-AgP = 1.5 g/L, [RhB] = 20 mg/L, Exposer time = 05 min)

The adsorptive photo-degradation of RhB was performed in batch reactors by taking 20 mg/L of the substrate (RhB in water) and 1.5 g/L of the catalyst (4 wt.% RGO-AgP). The solution was exposed to visible light (Irradiation chamber, BS 02, Germany) in closed pyrex flasks at 30 °C with constant stirring. The experiments were compared with the dark controls. The RhB analysis was done by the Spectrophotometric method at 553 nm. After 05 mins of irradiation, the degradation was observed to be 100% out of which 30% accounts for adsorption.

### Example 10: Adsorptive photodegradation of Rh6G over 4 wt.% RGO-AgP (Conditions: 4RGO-AgP = 1.5 g/L, [Rh6G] = 20 mg/L, Exposer time = 05 min)

The adsorptive photo-degradation of Rh6G was performed in batch reactors by taking 20 mg/L of the substrate (Rh6G in water) and 1.5 g/L of the catalyst. The solution was exposed to visible light (Irradiation chamber, BS 02, Germany) in closed pyrex flasks at 30 °C with constant stirring. The experiments were compared with the dark controls. The Rh6G analysis was done by the Spectrophotometric method at 526 nm. After 05 mins of irradiation, the degradation was observed to be 76% out of which 40.53% accounts for adsorption.

### Example 11: Adsorptive photodegradation of MB over 4 wt.% RGO-AgP (Conditions: 4RGO-AgP = 1.5 g/L, [MB] = 20 mg/L, Exposer time = 05 min)

The adsorptive photo-degradation of MB was performed in batch reactors by taking 20 mg/L of the substrate (MB in water) and 1.5 g/L of the catalyst (4 wt.% RGO-AgP). The solution was exposed to visible light (Irradiation chamber, BS 02, Germany) in closed pyrex flasks at 30 °C with constant stirring. The experiments were compared with the dark controls. The MB analysis was done by the Spectrophotometric method at 664 nm. After 05 mins of irradiation, the degradation was observed to be 98.57% out of which 45.29% accounts for adsorption.

### Example 12: Adsorptive photodegradation of CR over 4 wt.% RGO-AgP (Conditions: 4RGO-AgP = 1.5 g/L, [CR] = 20 mg/L, Exposer time = 05 min)

The adsorptive photo-degradation of CR was performed in batch reactors by taking 20 mg/L of the substrate (CR in water) and 1.5 g/L of the catalyst (4 wt.% RGO-AgP). The solution was exposed to visible light (Irradiation chamber, BS 02, Germany) in closed pyrex flasks at 30 °C with constant stirring. The experiments were compared with the dark controls. The CR analysis was done by the Spectrophotometric method at 500 nm. After 05 mins of irradiation, the degradation was observed to be 67.88% out of which 32.95% accounts for adsorption.

### Example 13: Adsorptive photodegradation of MO over 4 wt.% RGO-AgP (Conditions: 4RGO-AgP = 1.5 g/L, [MO] = 20 mg/L, Exposer time = 05 min)

The adsorptive photo-degradation of MO was performed in batch reactors by taking 20 mg/L of the substrate (MO in water) and 1.5 g/L of the catalyst (4 wt.% RGO-AgP). The solution was exposed to visible light (Irradiation chamber, BS 02, Germany) in closed pyrex flasks at 30 °C with constant stirring. The experiments were compared with the dark controls. The MO analysis was done by the Spectrophotometric method at 464 nm. After 05 mins of irradiation, the degradation was observed to be 69.92% out of which 33.25% accounts for adsorption.

### Example 14: Reusability of 4 wt.% RGO-AgP (Conditions: 4RGO-AgP = 1.5 g/L, [RhB] = 20 mg/L, Exposer time = 05 min)

After the experiment in Example 9, 4RGO-AgP was separated out from the RhB solution via centrifugation (5000 rpm for 12 min). It was washed with distilled water for 2-3 times followed by washing with ethanol and dried at 70 °C for 26 h. This is designated as 4RGO-AgP (spent 1). The adsorptive photo-degradation of RhB was performed in batch reactors by taking 20 mg/L of the substrate (RhB in water) and 1.5 g/L of the catalyst (4RGO-AgP (spent 1). The solution was exposed to visible light (Irradiation chamber, BS 02, Germany) in closed pyrex flasks at 30 °C with constant stirring. The experiments were compared with the dark controls. The RhB analysis was done by the Spectrophotometric method at 553 nm. After 05 mins of irradiation, the degradation was observed to be 100% out of which 29.23% accounts for adsorption.

### The main advantages of the present invention are:

**1.** The above mentioned inventions are novel, new and simple process of preparation of RGO- silver phosphate nanocomposites.
**2.** The preparation of RGO-AgP includes the use of very cheap chemicals.
**3.** These RGO-AgP nanocomposites are used as visible-light driven photocatalysts efficiently as compared to other photocatalysts.
**4.** The preparation of RGO-AgP nanocomposites includes easy steps.
**5.** Testing of the nanocomposites towards the photo-degradation of organic textile dyes.

## Claims

1. Reduced graphene oxide-silver phosphate (RGO-AgP) which comprises reduced graphene oxide (RGO) in the range of 0.82 - 5.44% and AgP in the range of 94.56 - 99.18%

2. One-pot in-situ photoreduction process for synthesis of a reduced graphene oxide-silver phosphate (RGO-AgP) as claimed in claim 1, wherein the said process comprising the steps of:
(a) pretreating graphene oxide (GO) at 70-90 °C for 24-30 h;
(b) making a transparent dispersion of graphene oxide as obtained in step (a) by ultrasonication for 30-60 mins;
(c) adding AgNO₃ on to graphene oxide dispersion as obtained in step (b) followed by ultrasonication of the reaction mixture for 15-30 mins;
(d) adding stoichiometric quantity of aqueous solution of di-ammonium hydrogen phosphate in the reaction mixture as obtained in step (c);
(e) aging the reaction mixture as obtained in step (d) for a period ranging between 30-60 mins followed by addition of dry ethanol;
(f) visible light illumination of the reaction mixture as obtained in step (e) for 1-2 h followed by separation of solids via centrifugation and drying at 60-70 °C for a period ranging 24-26 h and grinding to obtain reduced graphene oxide-silver phosphate (RGO-AgP).

3. The process as claimed in claim 2, wherein mole ratio of graphene oxide and AgNO₃ is in the range of 0.035-0.28.

4. The process as claimed in claim 2, wherein the AgP is prepared in-situ.

5. The process as claimed in claim 2, wherein *in-situ* prepared AgP is used as support.

6. The process as claimed in claim 2, wherein graphene oxide is used as dopant.

7. The process as claimed in claim 2, wherein di-ammonium hydrogen phosphate used in step (d) is as precursor for phosphate source.

8. The process as claimed in claim 7, wherein the support as well as precursor is taken in an aqueous solution in a stoichiometric ratio.

9. The process as claimed in claim 2, wherein yield of reduced graphene oxide-silver phosphate (RGO-AgP) is in the range of 97-100%.

## Patentansprüche

1. Reduziertes Graphenoxid-Silberphosphat (RGO-AgP), umfassend reduziertes Graphenoxid (RGO) im Bereich von 0,82 - 5,44 % und AgP im Bereich von 94,56 - 99,18 %.

2. Eintopf-in-situ-Photoreduktionsverfahren zur Synthese eines reduziertes Graphenoxid-Silberphosphat (RGO-Ag-P) nach Anspruch 1, worin das Verfahren die Schritte umfasst:
(a) Vorbehandeln von Graphenoxid (GO) bei 70-90 °C für 24-30 h;
(b) Herstellen einer transparenten Dispersion von Graphenoxid, das in Schritt (a) erhalten wurde, durch Ultrabeschallen für 30-60 Minuten;
(c) Zugeben von AgNO₃ auf die Graphenoxiddispersion, die in Schritt (b) erhalten wurde, gefolgt von Ultrabeschallen des Reaktionsgemischs für 15-30 Minuten;
(d) Zugeben einer stöchiometrischen Menge einer wässrigen Lösung von Diammoniumhydrogenphosphat in das in Schritt (c) erhaltene Reaktionsgemisch;
(e) Altern des in Schritt (d) erhaltenen Reaktionsgemischs für eine Dauer im Bereich zwischen 30-60 Minuten, gefolgt von der Zugabe von trockenem Ethanol;
(f) Bestrahlen des in Schritt (e) erhaltenen Reaktionsgemischs mit sichtbarem Licht für 1-2 h, gefolgt von einer Abtrennung von Feststoffen durch Zentrifugation und Trocknen bei 60-70 °C für eine Dauer im Bereich von 24-26 h und Mahlen, um reduziertes Graphenoxid-Silberphosphat (RGO-AgP) zu erhalten.

3. Verfahren nach Anspruch 2, worin das Molverhältnis von Graphenoxid und AgNO₃ im Bereich von 0,035-0,28 ist.

4. Verfahren nach Anspruch 2, worin das AgP *in-situ* hergestellt wird.

5. Verfahren nach Anspruch 2, worin *in-situ* hergestelltes AgP als Träger verwendet wird.

6. Verfahren nach Anspruch 2, worin Graphenoxid als Dotiermittel verwendet wird.

7. Verfahren nach Anspruch 2, worin in Schritt (d) verwendetes Diammoniumhydrogenphosphat ein Vorläufer einer Phosphatquelle ist.

8. Verfahren nach Anspruch 7, worin der Träger wie auch der Vorläufer in einer wässrigen Lösung in einem stöchiometrischen Verhältnis aufgenommen wird.

9. Verfahren nach Anspruch 2, worin die Ausbeute von reduziertes Graphenoxid-Silberphosphat (RGO-AgP) im Bereich von 97-100 % ist.

## Revendications

1. Oxyde de graphène réduit - phosphate d'argent (RGO-AgP) qui comprend de l'oxyde de graphène réduit (RGO) dans la plage allant de 0,82 à 5,44 % et de l'AgP dans la plage allant de 94,56 à 99,18%.

2. Processus de photoréduction *in-situ* monotope pour la synthèse d'un oxyde de graphène réduit - phosphate d'argent (RGO-AgP) tel que défini selon la revendication 1, ledit processus comprenant les étapes consistant à :
(a) prétraiter de l'oxyde de graphène (GO) à une température de 70 à 90°C pendant 24 à 30 heures ;
(b) préparer une dispersion transparente d'oxyde de graphène tel qu'obtenu à l'étape (a) par ultrasonication pendant 30 à 60 minutes ;
(c) ajouter de l'AgNO₃ sur la dispersion d'oxyde de graphène telle qu'obtenue à l'étape (b) puis effectuer l'ultrasonication du mélange réactionnel pendant 15 à 30 minutes ;
(d) ajouter une quantité stoechiométrique de solution aqueuse d'hydrogénophosphate de di-ammonium dans le mélange réactionnel tel qu'obtenu à l'étape (c) ;
(e) faire vieillir le mélange réactionnel tel qu'obtenu à l'étape (d) pendant une durée allant de 30 à 60 minutes puis ajouter de l'éthanol sec ;
(f) éclairer avec de la lumière visible le mélange réactionnel tel qu'obtenu à l'étape (e) pendant 1 à 2 heures puis séparer les solides par centrifugation et sécher à une température de 60 à 70°C pendant une durée allant de 24 à 26 heures et broyer pour obtenir de l'oxyde de graphène réduit - phosphate d'argent (RGO-AgP).

3. Processus selon la revendication 2, dans lequel le rapport molaire de l'oxyde de graphène et de l'AgNO₃ est dans la plage allant de 0,035 à 0,28.

4. Processus selon la revendication 2, dans lequel l'AgP est préparé in-situ.

5. Processus selon la revendication 2, dans lequel l'AgP préparé *in-situ* est utilisé comme support.

6. Processus selon la revendication 2, dans lequel l'oxyde de graphène est utilisé comme dopant.

7. Processus selon la revendication 2, dans lequel l'hydrogénophosphate de di-ammonium utilisé à l'étape (d) est utilisé comme précurseur pour la source de phosphate.

8. Processus selon la revendication 7, dans lequel le support ainsi que le précurseur sont pris dans une solution aqueuse dans un rapport stoechiométrique.

9. Processus selon la revendication 2, dans lequel le rendement d'oxyde de graphène réduit - phosphate d'argent (RGO-AgP) est dans la plage allant de 97 à 100 %.
